# EUROPEAN PATENT SPECIFICATION

(11) **EP 1 323 275 B1**
(45) Date of publication and mention of the grant of the patent: **16.08.2006**
(21) Application number: 01965793.1
(22) Date of filing: 06.09.2001
(51) Int. Cl.: H04L 29/06, G06F 17/30

(54) **METHOD OF CONTROLLING AN INFORMATION FLOW IN A DIGITAL NETWORK**
VERFAHREN ZUR STEUERUNG EINES INFORMATIONSFLUSSES IN EINEM DIGITALEN NETZWERK
PROCEDE POUR COMMANDER UN FLUX D'INFORMATIONS DANS UN RESEAU NUMERIQUE

(30) Priority: 07.09.2000 SE 0003166
(43) Date of publication of application: 02.07.2003
(73) Proprietor: TradeDoubler AB, 111 23 Stockholm (SE)
(72) Inventor: HOLLANDER, Jonas, S-352 42 Växjö (SE)
(74) Representative: Henningsson, Gunnar
(86) International application number: PCT/SE2001/001895
(87) International publication number: WO 2002/021798

(56) References cited:
- US-A- 5 652 908
- US-A- 6 006 264

## Description

### Field of the Invention

The present invention relates to a method of controlling an information flow in a digital network, which comprises a plurality of server units, which for information exchange are visitable by at least one user computer, which is connected to the network and has a program that controls the contact with the server units of the network, and a memory, in which information fetched from the server units is stored to be shown on a display connected to the user computer.

### Prior Art

The method which is briefly described above is mostly used in connection with information exchange on the Internet. On the Internet, the user computers are generally so-called personal computers, which are well known to the one skilled in the art and thus will not be described in more detail. Programs which are used in these computers for controlling the contact with the Internet are often called browsers and do not need any further presentation either to the one skilled in the art. Such a method is known from US-A-5 652 908.

In particular the Internet is distinguished in that the information is arranged in a disorderly manner and therefore difficult to find for an inexperienced computer user. Moreover, the Internet is distinguished in that it may be difficult for individual net addresses or web sites to assert themselves in relation to other net addresses or web sites and therefore the information which is accessible at these places may get lost in the large amounts of information.

### Objects of the Invention

In the light of these facts, a first object of the invention is to make it easier for a computer user, who in the following should be considered as included in the expression user computer, to find the information searched for in a computer network, and a second object of the invention is to make it easier for a server unit in the network to reach out with its information to user computers searching for the type of information that is provided by the server unit.

### Summary of the Invention

According to the invention, these objects are achieved by a method of the type mentioned by way of introduction, comprising the steps of installing a control server, to which some of the server units are linked via the network by storing a first instruction in them, which contains conditions for contacting the control server; a server unit which is visited by a user computer and linked to the control server sending a second instruction to the user computer when the conditions for contacting are satisfied, which second instruction contains information intended for the control server and causes the user computer to contact the control server for sending the information to the same; the control server sending a third instruction to the user computer, which third instruction contains conditions for renewed contacting of the control server; the third instruction causing the user computer, when said conditions for renewed contacting of the control server are satisfied, to send a request to the control server to control the information flow; the control server sending a fourth instruction to the user computer in response to this request when predetermined conditions are satisfied, which fourth instruction causes the user computer to contact, for information exchange, a server unit selected by the control server according to fixed rules; and the user computer fetching information from this selected server unit and storing the information in the memory to show the same on its display.

By installing according to the invention a control server, which has contact with both a server unit, which is visited by a user computer, and several other server units included in the network, it will, if the server units are combined into units or clusters which are related as to information content, be possible to offer in a reliable manner another information alternative to the user computer, if the user computer rejects a previous alternative or has made a choice which indicates an interest within the field of information offered by another server unit connected to the control server. Similarly, it is, of course, also possible under corresponding conditions for the server units which are connected to the control server to use the control server to spread their information content, in competition with only a few other server units and according to fixed rules, to a user computer in search of such information.

As a first alternative, the condition that the user computer interrupts in an undesirable manner the contact with a visited server unit is, as a condition for contacting the control server, integrated in said first instruction. This first alternative is particularly usable when the user computer has searched in vain for information in a server unit, which is indicated by the server unit being left without the user computer having in any way used the offered information, for instance, by placing an order.

As a second alternative, the condition that the user computer interrupts in a desirable manner the contact with a visited server unit is, as a condition for contacting the control server, integrated in said first instruction. This second alternative is particularly usable when the user computer might take an interest in related information after having found the information originally searched for, which is indicated by the server unit being left after the offered information has been used by the user computer, for instance, by the user computer having placed an order with the server unit.

According to the invention, address information about the visited server unit is preferably integrated in the information which is included in said second instruction. It will be understood that such address information facilitates the handling in the control server when the latter is to find an alternative server unit for the user computer among the connected server units.

In addition, as a condition for renewed contacting of the control server a time condition is preferably integrated in said third instruction, which time condition inhibits renewed contacting of the control server for a predetermined time. The purpose of this condition is in particular to avoid that a user computer is unnecessarily often offered information from different alternative server units.

Preferably, information fetched from said second instruction about the behaviour of the user computer in the visited server unit is integrated in said request to control the information flow. Also this solution aims at facilitating the handling and results in the control server directly having necessary decision data for the further control of the information flow.

In addition, the condition that a server unit linked to the control server is selected at the most as often as it causes the sending of a request to control the information flow to the control server is suitably integrated in said rules. This solution aims in particular at achieving equity between the server units which are connected to the control server, thus creating a fundamental condition for otherwise competing server units to take an interest in being connected to the control server.

Furthermore, said fourth instruction preferably comprises the instruction to show the information shown from the selected server unit in a new window on the display. This solution is advantageous, in particular as it does not affect the previous window on the display and the new window is easy to close if the information shown is not desirable.

Finally, addresses of a plurality of server units, which must contain mutually related information, are preferably put together in the control server as a cluster, from which the control server selects a server unit. Thus, it is possible, in a rapid and very simple manner, to pass on a visiting user computer from one server unit, which includes a certain type of information, to the next server unit, which includes related information.

### Brief Description of the Drawings

A preferred embodiment of the invention will be described below with reference to the accompanying drawings, in which

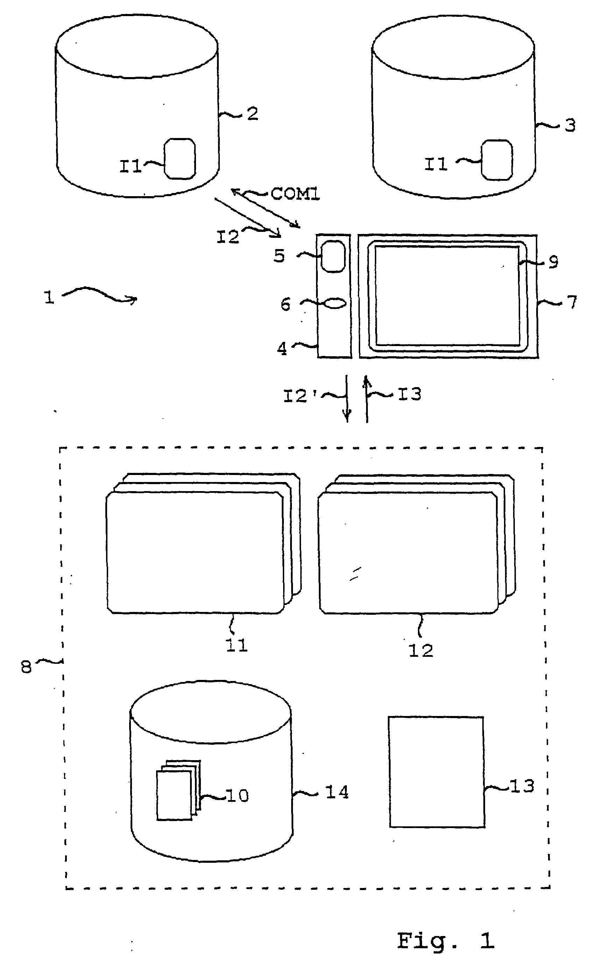

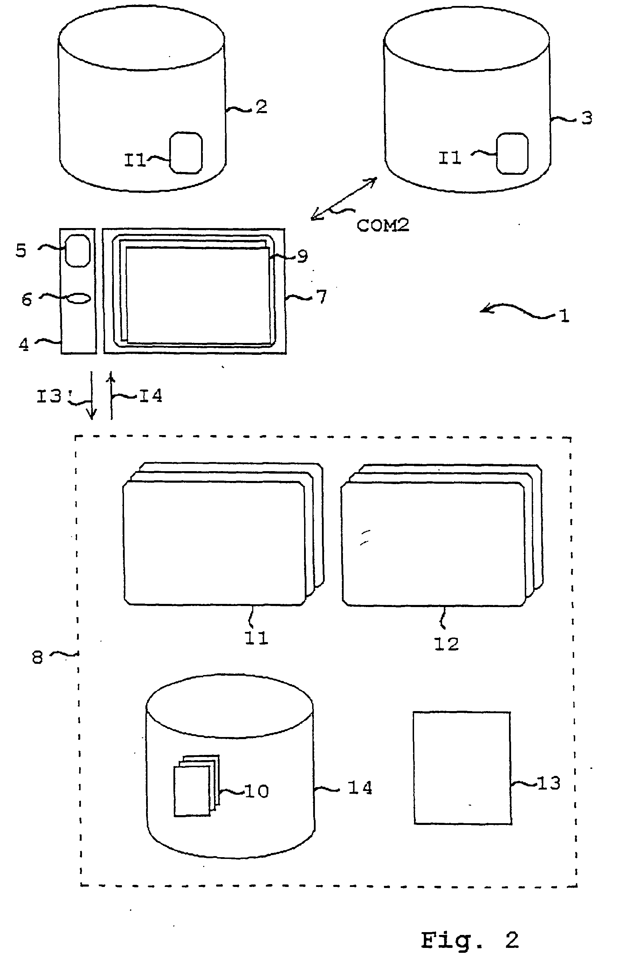

Figs 1 and 2 schematically show parts of a data network, in which the method according to the invention is used.

### Description of a Preferred Embodiment

The object of the preferred embodiment of the method according to the invention is to use the method to build a service, by means of which commercial web sites 2, 3, which are part of a data network 1, in this case the Internet, can almost double the traffic they had without the service. The traffic increase should consist of visitors from the right target group, i.e. those who have shown an interest in that offered by a web site 2, 3.

In order to achieve this, use is made of a method according to the invention, the participating web sites 2, 3 modifying their so-called HTML pages such that visitors, who do not convert, i.e. do not buy anything, register themselves, open an account, etc, are under certain conditions offered another related web site 3 as they leave the web site 2.

To make various web sites 2, 3 choose to connect to the service, the participating web sites 2, 3 are offered, on the one hand, the possibility of laying down conditions on which another related web site 2, 3 is to be offered and, on the other, the possibility of being informed by statistics about the increase in visitors who come from other web sites 2, 3 to their own web site 2, 3, and in visitors who are sent from their own web site 2, 3 to other web sites 2, 3.

In this connection, a visitor is a person who visits a certain web site 2 by means of a computer 4 and thus shows an interest in a certain subject. When visiting a web site 2, the computer 4 fetches a minimal Java script 12, whose only function is to fetch a longer script 13 from a traffic control server 8, to which the operator of the method according to the invention has access.

The script I3 which is delivered to a browser 5 in the computer 4 is adapted to the information coming after the information that comes to the control computer 8 (SID, referring document and possibly cookies). Depending on the status of the web site 2 in the control server 8, an empty script or a script which does not open a new window can be delivered.

A web site cookie (included in I2) is created by the web site 2 in question when the web site 2 wants to exclude a certain visitor from the control server 8. Since the cookie is set by the web site 2, only the web site 2 is able to read it. This, in turn, makes it necessary for the Java script which is served by the control server 8 to know the syntax, read the cookie and on the basis thereof decide whether a proposal is to be shown or not.

A first cookie (included in I2') is set at a first contact with the control server 8 (the Java script server). The cookie is persistent, i.e. lives forever unless it is removed by the user. The content is only a unique identifier (an integer) .

Yet another cookie (included in I4) is set when an alternative is shown to the user. The lifetime of the cookie is preferably set at 30 minutes and during this time no new alternatives will be shown.

Web sites 2, 3 that are involved in the method must modify the so-called BODY tag in the HTML documents which include the scripts for calling a function when leaving the page.

A group of web sites 2, 3 in one and the same niche are put together as a cluster 10, in which other web sites are, according to fixed rules, suggested to visitors leaving the web site 2, 3. Thus, a customer of the control server 8 is always a web site 2, 3 participating in a cluster 10.

The control server 8 comprises three main parts, namely a script sending part 11, a bounce sending part 12 and a support part 13, and communicates with a database 14, in which all data is stored.

The script sending part 11 delivers the Java scripts to the web sites included in the various clusters 10.

The bounce sending part 12 ensures that a web site 2, 3 gets exactly as much traffic back as it sends into a cluster 10. When a new window 9 is opened, a request is passed on to the bounce sending part 12 which quickly picks out the address of the web site 2, 3' which is to be opened in the new window 9.

The support part 13 is the interface with the users of the control server 8, both on the customer and the provider side.

The person skilled in the art will understand that the terminology used in the above description is based on the described Internet application, whereas the terminology used in the introduction and the claims is chosen with a view to not limiting the method according to the invention to such an application. Thus, the inventive method may very well be used also in other data networks and in telecommunication networks, in which alternative services are accessible via a display of a telephone.

## Claims

1. A method of controlling an information flow in a digital network (1), which comprises a plurality of server units (2, 3), which for information exchange are visitable by at least one user computer (4), which is connected to the network (1) and has a program (5) that controls the contact with the server units (2, 3) of the network (1), and a memory (6), in which information fetched from the server units (2, 3) is stored to be shown on a display (7) connected to the user computer (4), **characterised in that** a control server (8) is installed, to which some of the server units (2, 3) are linked via the network (1) by storing a first instruction (I1) in them, which contains conditions for 2 contacting the control server (8), that a server unit (2) which is visited (COM1) by a user computer (4) and linked to the control server (8) sends a second instruction (I2) to the user computer (4) when the conditions for contacting are satisfied, which second instruction (I2) contains information intended for the control server (8) and causes the user computer (4) to contact the control server (8) for sending (I2') the information to the same, that the control server (8) sends a third instruction (I3) to the user computer (4), which third instruction (I3) contains conditions for renewed contacting of the control server (8), that the third instruction (I3) causes the user computer (4), when said conditions for renewed contacting of the control server (8) are satisfied, to send a request (I3') to the control server (8) to control the information flow, that the control server (8) sends a fourth instruction (I4) to the user computer (4) in response to this request (I3') when predetermined conditions are satisfied, which fourth instruction (I4) causes the user computer (4) to contact (COM2), for information exchange, a server unit (3) selected by the control server (8) according to fixed rules, and that the user computer (4) fetches information from this selected server unit (3) and stores the information in the memory (4) to show the same on its display (7).

2. A method as claimed in claim 1, **characterised in that** as a condition for contacting the control server (8) the condition that the user computer (4) interrupts in an undesirable manner the contact with the visited server unit (2) is integrated in said first instruction (11).

3. A method as claimed in claim 1 or 2, **characterised in that** as a condition for contacting the control server (8) the condition that the user computer (4) interrupts in a desirable manner the contact with the visited server unit (2) is integrated in said first instruction (I1).

4. A method as claimed in any one of claims 1-3, **characterised in that** address information about the visited server unit (2) is integrated in the information which is included in said second instruction (I2).

5. A method as claimed in any one of claims 1-4, **characterised in that** as a condition for renewed contacting of the control server (8) a time condition, which for a predetermined time inhibits renewed contacting of the control server (8), is integrated in said third instruction (I3).

6. A method as claimed in any one of claims 1-5, **characterised in that** information fetched from said second instruction (I2) about the behaviour of the user computer (4) in the visited server unit (2) is integrated in said request (13') to control the information flow.

7. A method as claimed in any one of claims 1-6, **characterised in that** the condition that a server unit (2, 3) linked to the control server (8) is selected at the most as often as it causes the sending of a request (13') to control the information flow to the control server (8) is integrated in said rules.

8. A method as claimed in any one of claims 1-7, **characterised in that** said fourth instruction (I4) comprises the instruction to show the information shown from the selected server unit (3) in a new window (9) on the display (7).

9. A method as claimed in any one of claims 1-8, **characterised in that** in the control server (8) addresses of a plurality of server units (2, 3), which must contain mutually related information, are put together as a cluster (10), from which the control server (8) selects a server unit (2, 3).

## Patentansprüche

1. Verfahren zum Steuern eines Informationsflusses in einem digitalen Netzwerk (1), das aufweist: mehrere Servereinheiten (2, 3), die für einen Informationsaustausch durch mindestens einen Benutzercomputer (4) besuchbar sind, der mit dem Netzwerk (1) verbunden ist und ein Programm (5) aufweist, das den Kontakt mit den Servereinheiten (2, 3) des Netzwerks (1) steuert, und einen Speicher (6), in dem von den Servereinheiten (2, 3) abgerufene Information gespeichert wird, um sie auf einer mit dem Benutzercomputer (4) verbundenen Anzeige (7) darzustellen;
**dadurch gekennzeichnet,**
**dass** ein Steuerserver (8) installiert ist, mit dem einige der Servereinheiten (2, 3) über das Netzwerk (1) verknüpft werden, indem eine erste Anweisung (I1) darin gespeichert wird, die Bedingungen für die Kontaktaufnahme mit dem Steuerserver (8) enthält,
**dass** eine Servereinheit (2), die durch einen Benutzercomputer (4) besucht (COM1) wird und mit dem Steuerserver (4) verknüpft ist, eine zweite Anweisung (I2) an den Benutzercomputer (4) überträgt, wenn die Bedingungen für die Kontaktaufnahme erfüllt sind, wobei die zweite Anweisung (I2) für den Steuerserver (8) bestimmte Information enthält und den Benutzercomputer (4) veranlasst, mit dem Steuerserver (8) Kontakt aufzunehmen, um die Information an diesen zu übertragen (12');
**dass** der Steuerserver (8) eine dritte Anweisung (I3) an den Benutzercomputer (4) überträgt, wobei die dritte Anweisung (I3) Bedingungen für eine erneute Kontaktaufnahme mit dem Steuerserver (8) enthält;
**dass** die dritte Anweisung (I3), wenn die Bedingungen für eine erneute Kontaktaufnahme mit dem Steuerserver (8) erfüllt sind, den Benutzercomputer (4) veranlasst, eine Anforderung (13') zum Steuern des Informationsflusses an den Steuerserver (8) zu übertragen;
**dass** der Steuerserver (8) in Antwort auf diese Anforderung (13') eine vierte Anweisung (14) an den Benutzercomputer (4) überträgt, wenn vorgegebene Bedingungen erfüllt sind, wobei die vierte Anweisung (14) den Benutzercomputer (4) veranlasst, eine durch den Steuerserver (8) gemäß festen Regeln ausgewählte Servereinheit (3) für einen Informationsaustausch zu kontaktieren (COM2); und
**dass** der Benutzercomputer (4) Information von der ausgewählten Servereinheit (3) abruft und die Information im Speicher (4) speichert, um sie auf seiner Anzeige (7) darzustellen.

2. Verfahren nach Anspruch 1, **dadurch gekennzeichnet, dass** in der ersten Anweisung (I1) als Bedingung für eine Kontaktaufnahme mit dem Steuerserver (8) die Bedingung integriert ist, dass der Benutzercomputer (4) auf eine unerwünschte Weise den Kontakt mit der besuchten Servereinheit (2) unterbricht.

3. Verfahren nach Anspruch 1 oder 2, **dadurch gekennzeichnet, dass** in der ersten Anweisung (I1) als Bedingung für eine Kontaktaufnahme mit dem Steuerserver (8) die Bedingung integriert ist, dass der Benutzercomputer (4) auf eine erwünschte Weise den Kontakt mit der besuchten Servereinheit (2) unterbricht.

4. Verfahren nach einem der Ansprüche 1 bis 3, **dadurch gekennzeichnet, dass** in der in der zweiten Anweisung (I2) enthaltenen Information Adresseninformation über die besuchte Servereinheit (2) integriert ist.

5. Verfahren nach einem der Ansprüche 1 bis 4, **dadurch gekennzeichnet, dass** in der dritten Anweisung (I3) als Bedingung für eine erneute Kontaktaufnahme mit dem Steuerserver (8) eine Zeitbedingung integriert ist, gemäß der für eine vorgegebene Zeitdauer eine erneute Kontaktaufnahme mit dem Steuerserver (8) unterdrückt wird.

6. Verfahren nach einem der Ansprüche 1 bis 5, **dadurch gekennzeichnet, dass** in der Anforderung (I3') von der zweiten Anweisung (I2) abgerufene Information über das Verhalten des Benutzercomputers (4) in der besuchten Servereinheit (2) integriert ist, um den Informationsfluss zu steuern.

7. Verfahren nach einem der Ansprüche 1 bis 6, **dadurch gekennzeichnet, dass** in den Regeln die Bedingung integriert ist, dass eine mit dem Steuerserver (8) verknüpfte Servereinheit (2, 3) höchstens so oft ausgewählt wird, wie sie die Übertragung einer Anforderung (I3') veranlasst, um den Informationsfluss zum Steuerserver (8) zu steuern.

8. Verfahren nach einem der Ansprüche 1 bis 7, **dadurch gekennzeichnet, dass** die vierte Anweisung (I4) die Anweisung enthält, die von der ausgewählten Servereinheit (3) erhaltene Information in einem neuen Fenster (9) auf der Anzeige (7) darzustellen.

9. Verfahren nach einem der Ansprüche 1 bis 8, **dadurch gekennzeichnet, dass** im Steuerserver (8) Adressen mehrerer Servereinheiten (2, 3), die wechselseitig miteinander in Beziehung stehende Information enthalten müssen, zusammen als Cluster (10) behandelt werden, von dem der Steuerserver (8) eine Servereinheit (2, 3) auswählt.

## Revendications

1. Procédé de commande d'un flux d'informations dans un réseau numérique (1), qui comprend une pluralité d'unités de serveur (2, 3), qui peuvent être visitées, pour un échange d'informations, par au moins un ordinateur utilisateur (4), qui est connecté au réseau (1) et a un programme (5) qui commande la mise en contact avec les unités de serveur (2, 3) du réseau (1), et une mémoire (6) dans laquelle les informations extraites des unités de serveur (2, 3) sont stockées pour être affichées sur un écran (7) connecté à l'ordinateur utilisateur (4), **caractérisé en ce qu'**un serveur de commande (8) est installé auquel certaines des unités de serveur (2, 3) sont reliées via le réseau (1) en stockant une première instruction (I1) dans ces unités, qui contient des conditions pour contacter le serveur de commande (8), **en ce qu'**une unité de serveur (2), qui est visitée (COM1) par un ordinateur utilisateur (4) et reliée au serveur de commande (8), envoie une deuxième instruction (I2) à l'ordinateur utilisateur (4) lorsque les conditions de contact sont satisfaites, laquelle deuxième instruction (I2) contient des informations destinées au serveur de commande (8) et amène l'ordinateur utilisateur (4) à entrer en contact avec le serveur de commande (8) pour envoyer les informations (I2') à celui-ci, **en ce que** le serveur de commande (8) envoie une troisième instruction (I3) à l'ordinateur utilisateur (4), laquelle troisième instruction (I3) contient des conditions pour la reprise de contact avec le serveur de commande (8), **en ce que** la troisième instruction (13) amène l'ordinateur utilisateur (4), lorsque lesdites conditions de reprise du contact avec le serveur de commande (8) sont satisfaites, à envoyer une requête (13') au serveur de commande (8) pour commander le flux d'informations, **en ce que** le serveur de commande (8) envoie une quatrième instruction (14) à l'ordinateur utilisateur (4) en réponse à cette requête (I3') lorsque des conditions prédéterminées sont satisfaites, cette quatrième instruction (I4) amenant l'ordinateur utilisateur (4) à entrer en contact (COM2), pour un échange d'informations, avec une unité de serveur (3) choisie par le serveur de commande (8) selon des règles fixées, et **en ce que** l'ordinateur utilisateur (4) extrait des informations de cette unité de serveur choisie (3) et stocke les informations dans la mémoire (4) pour les afficher sur son écran (7).

2. Procédé selon la revendication 1, **caractérisé en ce que**, comme condition d'entrée en contact avec le serveur de commande (8), la condition que l'ordinateur utilisateur (4) interrompe le contact d'une manière non souhaitée avec l'unité de serveur visitée (2) est intégrée dans ladite première instruction (I1).

3. Procédé selon la revendication 1 ou 2, **caractérisé en ce que**, comme condition d'entrée en contact avec le serveur de commande (8), la condition que l'ordinateur utilisateur (4) interrompe le contact d'une manière souhaitée avec l'unité de serveur visitée (2) est intégrée dans ladite première instruction (I1).

4. Procédé selon l'une quelconque des revendications 1 à 3, **caractérisé en ce que** les informations d'adresses sur l'unité de serveur visitée (2) sont intégrées dans les informations qui sont incluses dans ladite deuxième instruction (I2).

5. Procédé selon l'une quelconque des revendications 1 à 4, **caractérisé en ce que**, comme condition pour la reprise du contact avec le serveur de commande (8), une condition temporelle, empêchant la reprise du contact avec le serveur de commande (8) pendant une durée prédéterminée, est intégrée dans ladite troisième instruction (I3).

6. Procédé selon l'une quelconque des revendications 1 à 5, **caractérisé en ce que** les informations extraites de ladite deuxième instruction (I2) sur le fonctionnement de l'ordinateur utilisateur (4) dans l'unité de serveur visitée (2) sont intégrées dans ladite requête (I3') pour commander le flux d'informations.

7. Procédé selon l'une quelconque des revendications 1 à 6, **caractérisé en ce que** la condition qu'une unité de serveur (2, 3) reliée au serveur de commande (8) soit choisie au plus aussi souvent qu'elle entraîne l'envoi d'une requête (I3') pour commander le flux d'informations vers le serveur de commande (8) est intégrée dans lesdites règles.

8. Procédé selon l'une quelconque des revendications 1 à 7, **caractérisé en ce que** ladite quatrième instruction (14) comprend l'instruction d'afficher les informations affichées par l'unité de serveur choisie (3) dans une nouvelle fenêtre (9) sur l'écran (7).

9. Procédé selon l'une quelconque des revendications 1 à 8, **caractérisé en ce que**, dans le serveur de commande (8), les adresses d'une pluralité d'unités de serveur (2, 3), qui doivent contenir des informations mutuellement associées, sont regroupées sous la forme d'une grappe (10), à partir de laquelle le serveur de commande (8) choisit une unité de serveur (2, 3).
